# EUROPEAN PATENT SPECIFICATION

(11) **EP 2 083 040 B1**
(45) Date of publication and mention of the grant of the patent: **17.08.2011**
(21) Application number: 08103509.9
(22) Date of filing: 11.04.2008
(51) Int. Cl.: C08J 9/14, C08L 67/06

(54) **One component unsaturated polyester foams**
Ein-Komponenten ungesättigte Polyesterschäume
Mousses de polyester non saturées à un composant

(30) Priority: 25.01.2008 EP 08100959
(43) Date of publication of application: 29.07.2009
(73) Proprietor: Altachem N.V., 9800 Deinze (BE)
(72) Inventor: De Schrijver, Aster, 9831, Deurle (BE)
(74) Representative: Moens, Marnix Karel Christiane

(56) References cited:
- EP-A- 1 798 255
- CN-A- 101 074 313
- FR-A- 1 468 237
- US-A- 4 808 639

## Description

One and two component Polyurethane foams (PUR-foams) are well known systems and are used in aerosol type cans for numerous purposes.

A PUR formulation consists of a mixture of polyols, diisocyanates, liquefied gases as blowing agents, and several additives. Preferred polyols have an average functionality between 2 and 3 and a number average molecular weight of 500 to 6000 and mostly in the range 1000 to 4800.

Diisocyanates (NCO) have a functionality of at least 2. In two component foams, both a polyol/additive/blowing agent and a NCO/additive/blowing agent mixture are made in separate cans. Both mixtures are blended upon spraying. In a once component foam (OCF) the polyols and NCO molecules are mixed in one can, a prepolymer is formed within the can prior to spraying.

Normally, the ratio between isocyanate (NCO) and alcohol (OH) groups is kept above one. After spraying, the froth (sprayed material) expands due to the boiling of low boiling gases and curing of the froth: the excess NCO reacts after spraying with water present in air into urea linkages and CO₂ (g). CO₂ evaporates from the froth, a post-expansion is observed.

In the past several types of additives like chain extenders, flame retardants, plasticizers, blowing agents and others were used, developed or when necessary replaced without actually changing the chemical backbone composition of these foams.

Unsaturated polyesters (UP) or polyester resins are of the most important used polymers in the world due to their versatility, availability and low cost. UP are mixtures of polyester prepolymers and vinyl monomers. The polyester prepolymers are made from glycols and both saturated and unsaturated dicarboxylic acids. The present double bonds in the polyester prepolymer structure enable the crosslinking of the prepolymer with the present vinylic monomers using specific initiators and catalysts.

The present invention focuses on the creation of one component foams with unsaturated polyester resins as chemical backbone. A main advantage of this kind of chemistry is the use of environmental friendly materials, replacing the generally toxic diisocyanates. Moreover, the curing kinetics of unsaturated polyesters is much faster compared to the slow curing behaviour of PUR-foams, which can go up to 24 hrs. This results in a more wide range of possible applications of UP foams compared to PUR foams. As a third advantage, UP resins are sold at relatively low prices compared to PUR resins.

A range of rheology modifiers, plastisicers, flame retardants, intitiators, cross-linkers, blowing agents, surfactants, tackifiers and other additives are used in certain mixing ratios in order to complete an ecological friendly, fast curing unsaturated polyester foam with suited mechanical characteristics.

### BACKGROUND OF THE INVENTION

According to one aspect, the present invention is concerned with a new environmentally friendly chemical composition of the so-called one component foams, OCF, by the use of unsaturated polyester resins.

According to another aspect of the invention there is provided a pressurized can or vessel containing such composition.

Unsaturated polyester resins (UP resin) are formed by the cross linking of the double bonds present in the polyester prepolymers with vinylic monomers using initiators and catalysts. The unsaturated polyesters are made by the reaction of glycols like ethylene glycol, propylene glycol, and others with saturated and unsaturated dicarboxylic acids or anhydrides like adipic acid and phtalic anhydride (both saturated) and maleic acid and fumaric acid as examples of unsaturated acids. These systems are sold as commercial products together with suited vinylic monomers such as divinylbenzene, styrene methyl methacrylate and others which crosslink the polyester resin.

To perform the crosslinking, an initiator has to be mixed with the UP resin. Normally peroxide initiators like benzoyl peroxide, methyl ethyl ketone peroxide, Cumene peroxide and Lauryl peroxide and others are used. Each different type of intitiator has its specific processing temperature and possible accelerator. For example, benzoyl peroxide (BPO) initiates crosslinking between 0 and 25°C, which is an acceptable temperature range for the intended use of the UP system. The activity of the initiator is augmented by accelerators which, via a redox reaction, favour the disintegration of the peroxide bond. For example, BPO is activated by tertiary amines like dimethyl aniline, diethyl aniline, and some commercial products like Bisomer PTE. Another suited initiator and activator system is the combination methyl ether ketone peroxide/Cobalt Octoate (MEKP/CoOctoate) wchich has a processing temperature of 20-25 °C.

A blowing agent needs to be added to the UP resin to create an aerosol system, which allows spraying of the system into a curing froth, resulting in stable foam. Several blowing agents, typical liquefied gases like butane, propane, isobutene, dimethylether and halogenated compounds can be used. These gases need some typical characteristics like the amount of dissolution of the UP resin in the liquid phase, boiling temperature and vapour pressure in the can in order to create an ideal mixture for the foam formulation.

Several other additives have to be used to improve specific properties of the final foam, such as flame-retardants, plasticizers, extenders and catalysts.

In a one component system, the initiator is present in the UP resin formulation. Reaction is however prevented by micro-encapsulation of the initiator. Upon spraying, the micro-capsules are broken, and the initiator is mixed within the UP resin, causing curing to occur after spraying like the two component formulations.

The UP resin comprises preferably 50 to 90 weight% of the total weight, the initiator is blended with 1 to 10 solid parts per 100 parts resin or matrix (phm). The catalyst content should also be between 1 and 10 phm. Other additives may be blended with different amounts needed for optimal foam formulation. Blowing gases are blended with 2 to 30 weight% and preferably with 5 to 20 weight%.

The reaction temperature can vary, depending on resin/initiator/catalyst system from 25 °C up to 150 °C.

### MAIN COMPONENTS OF THE FOAMS

Both one component and two component UP resin foams will comprise following constituents:
- Unsaturated polyester resin
- Initiator
- Activator
- Flame retardant
- Extender and/or plasticizer (liquid and/or solid)
- Colorant (optional)
- Compatibilizing Gas and blowing agent
- Thickeners
- Foam processing additives

### Unsaturated Polyester Resin

The unsaturated resin which can be utilized in the present invention include the following materials:
a. di-, tri- to polyfunctional alcohols with a molecular weight ranging from 50 to 1000 g/mol, low molecular weight glycols are preferred;
b. saturated di-, tri- to polyfunctional carboxylic acids with molecular weight ranging between 50 and 1000 g/mol, with dicarboxylic acids possessing 4 to 8 carbon atoms preferred;
c. unsaturated di-, tri- to polyfunctional carboxylic acids with molecular weight ranging between 50 and 1000 g/mol, with dicarboxylic acids possessing 4 to 8 carbon atoms preferred, these acids must possess at least one unsaturation;

These materials are reacted into the polyester resin and compounded with vinylic monomers possessing a functionality (f) of at least two, with each double bond having an f=2. Mainly molecules like vinyl or divinyl benzene and allylic terminated phtalates, cyanurates and others can be used. Vinylmonomers can be present from 35 to 65 weight %.

Any polymer with an (poly)ester backbone and possessing some amount of double bonds may be utilized to some extend and is therefore included in the broad definition of an unsaturated polyester resin.

Generally, the unsaturated polyester compound should have an equivalent weight in the range of about 400 to about 6000 grams/mole. Preferably the equivalent weight is between 1000 and 4800 grams/mole. The minimum amount of double bonds is 5 to 10 mole double bonds/mole resin. The amount of present double bonds largely determines the stiffness of the cured material and therefore no maximum amount double bonds present per mole is defined in order to freely tailor the thermophysical characteristics of the foam: objected usage temperature, mechanical stiffness or elasticity of the foam, etc.

### Initiator

Generally, the curing of unsaturated polyesters with vinyl monomers is performed with peroxide initiators, always in combination with a catalyst. The initiator is the main parameter to determine the curing temperature and rate and is mixed with a mixing ratio ranging from 0.01 up to 7.5 weight percent of the total reaction mixture. The initiator is usually of a peroxide type of molecule and comprises molecules like benzoyl peroxide, methyl ether keton peroxide, and others that are known to the art. For one component foams, this initiator is micro-encapsulated.

### Accelerator

Used accelerators include the standard combinations of tertiary amine and organometallic catalysts which should be present at about 0.0001 to 5 weight percent of the reaction mixture. Suitable catalysts include, but are not limited to, Cobalt Octoate, dimethyl aniline, diethylaniline, dimethyl,p-toluidine, ethoxylated p-toluidine, and similar compounds that are known to the art.

### Liquid fillers and flame retarders

Flame retardancy of the obtained froth can be a requirement; in that case liquid fillers like tris-dichloropropylphosphate (TCPP) can be used. Also liquid or liquefied halogen-free flame retardants like red phosphorous, ammonium polyphosphate (APP) and others can be used. As liquid extenders to control the flow of the froth while curing as well as to control the thermal and mechanistic characteristics of the cured system, both saturated and/or unsaturated methyl esters of biodiesels will be used instead of chlorinated and other toxic fillers. The list is not limited to one kind of saturated or unsaturated fatty acid. Since different introduced unsaturated biodiesel esters will have a different influence on the thermomechanistic behaviour of the cured foam, tailor-made foams with numerous different possible applications are obtained.

Both flame retardants as liquid extenders are mixed in a part by weight ratio of 1 to 40 versus the UP resin, preferably with a mixing ratio of 5 to 20.

### Foaming Agents

Blowing agents that are conventionally used in the art of foam formulations are used here. Main foaming agents include propane, butane, isobutane, dimethyl ether and their mixtures in all proportions. The amounts with which the foaming agents are used in the formulation can differ from 1 to 20 weight% due to the variation in solubility of the different blowing agents with the UP resins, differences in vapour pressure and boiling points.

### Surface Active Agents

Suitable stabilizers include "hydrolysable" polysiloxane-polyoxyalkylene block copolymers. Another useful class of loam stabilizers are the "non-hydrolysable" polysiloxane-polyoxyalkylene block copolymers. The latter class of copolymers differs from the abovementioned polysiloxane-polyoxyalkylene block copolymers in that the polysiloxane moiety is bonded to the polyoxyalkylene moiety through direct carbon-to-silicon bonds, rather than through carbon-to-oxygen-to-silicon bonds.

The stabilizer should be present at about 0.0001 percent to about 5 percent by weight of the total reaction mixture and preferably between 0.01 and 2 percent by weight.

### Thickeners

Given the high content of vinyl monomers, the low vicscosity of the froth can result in the collapse of the foam structure. Therefore thickeners must be added to the reaction mixture. Thickeners include fumed silica (Aerosil 200) and several viscosity active materials like polyhydroxy carboxylic acids as supplied by surfactant manufacturers.

### Foam Processing Art

A foam processing additive sometimes called Foam Control Agent is used for enhancing the properties of low density, foam processing aid includes a cross linking agent and /or extending agent, stabilizer agents and rheology modifiers, to yield a foam having a specific gravity between 10 and 50 kg/m³ and suited characteristics.

### DETAILED DESCRIPTION OF THE INVENTION

Unsaturated polyester resins (UP resins) were tested for their usage as chemical backbone in both one component and two component foam systems. Main benefits of this change in chemical backbone towards UP are:
- The use of solely ecological friendly non-toxic materials to construct foams which can be used for different applications to some extent replace the existing polyurethane foams.
- Reduced curing times.
- Lower cost per volume.
- High shelf-life.
- Similar foam characteristics to the polyurethane reference

In summary, the invention is directed to a process for preparing one component foam (OCF) mixtures to be packed in pressurized vessels and / or aerosol cans based on an unsaturated polyester resin.

Upon application of the two component foam, both the mixture containing unsaturated polyesters and the initiator mixture are blended during spraying. In a one component foam, the active initiator is contained with a micro-encapsulated state. All products are then contained in one can. For a two component system, the initiator must be kept away from the accelerator and the resin. In the given example, the resin, accelerator, half of the emulsifier and blowing gas are stored in can A; initiator, flame retardant, silicone, the other half of emulsifier and blowing gas are stored in can B. Can A must contain exactly 2 times the volume of can B. Upon spraying, the ball valve of can B is opened halfways.

### Typical examples of suitable formulations

One and two component foams

| **Component** | **Mixing ratio** | **Examples** |
|---|---|---|
| Unsaturated polyester resin / vinyl monomers | 100.00 pbw | To be obtained from Cray Valley^{™} , Dow Chemicals^{™}, and others |
| Initiator | 4 pbw | Benzoyl Peroxide |
| Activator | 2.00 pbw | Bisomer PTE^{™} |
| Liquid filler / flame retardant | 10.00 pbw | Chlorinated paraffin, TCPP, TEP |
| Liquid (reactive) filler | 20.00 pbw | Castor oil methyl ester |
| Thickener | 2 pbw | Aerosil 200 |
| | 2 pbw | BYK^{®} R605 |
| Surfactant | 8.00 pbw | Tegostab™ B8870 |
| LPG | 5 weight%¹ | Propane / Butane / Isobutane |
| DME | 10.00 weight%¹ | Dimethylether |

| | | |
|---|---|---|
| ¹ Calculated weight% for the complete mixture All amounts in above table may vary giving the ambient temperature, humidity, type of applicator (adapter, gun), application, etc. | | |

For a two component system, the initiator must be kept away from the activator, which activates the initiator via a redoxreaction. In can A a mixture of UP resin, the initiator, blowing agent and some other additives is made. In can B the other part of the UP resin, the activator, blowing agent and some other additives is prepared. To facilitate correct mixing of both preparations, each should be filled with an identical percentage solids and gasses. Mixing is proceeded for example during spraying by a static blender at the tip of the spraying gun or any other way to mix both systems upon application.

### Typical example of a suitable 2 component formulation

| Component A | | Component B | |
|---|---|---|---|
| product | pbw | product | pbw |
| UP resin with | | | |
| 40. vinyl | | | |
| monomer | 100 | BPO | 4 |
| emulsifier | 4 | TCPP | 8 |
| accelerator | 2 | silicone | 20 |
| | | emulsifier | 4 |
| | | | |
| | | | |

| gas | Total weight% | gas | Total weight% |
|---|---|---|---|
| LPG¹ | 7.8 | LPG¹ | 8.2 |

| | | | |
|---|---|---|---|
| ¹ a mixture of 46.5 weight% propane, 33.5 weight% butane, 20 weight isobutene. | | | |

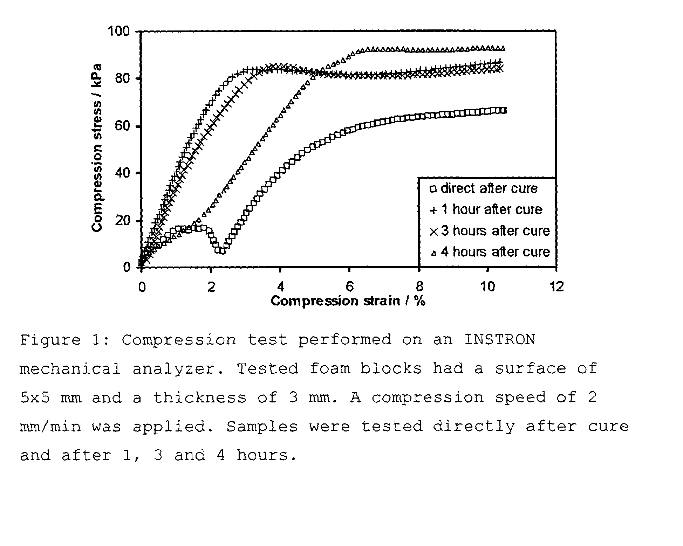

This formulation was sprayed in moulds to perform compression tests, as shown in Figure 1. At 10 % compression, average compression strengths (6 repeats) of 66, 86, 84 and 93 kPa are obtained for the 0, 1, 3 and 4 hrs samples, respectively. This augmenting trend indicates that curing continues over a few hours. Directly after curing, a rigid material is already obtained, if compared to a value of 30 kPa for a normal polyurethane foam at 10 % compression.
1. In summary according to one aspect of the invention there is provided a polymer foam composition consisting of an unsaturated resin, flame retardants, plasticizers, emulsifiers, initiator, activator, thickener, surface agent and blowing agent with one or several of the following additional features :
   a.the unsaturated resin is an unsaturated polyester comprising 50 to 90 % by weight, preferably between 70 and 80 %.
   b. the initiator is added to the resin comprising 0.01 to 10 % by weight of the total mixture, preferably between 3 and 8 weight %.
   c. the activator is added to the resin comprising 0.01 to 10 % by weight of the total mixture, preferably between 1 and 5 weight %.
   d. the flame retardant is added to the resin comprising 0.01 to 50 % by weight of the total mixture, preferably between 15 and 30 weight %.
   e. the plasticizer is added to the resin comprising 0.01 to 10 % by weight of the total mixture, preferably between 3 and 8 weight %.
   f. the emulsifier is added to the resin comprising 0.01 to 10 % by weight of the total mixture, preferably between 3 and 8 weight %.
   g. the thickener is added to the resin comprising 0.01 to 10 % by weight of the total mixture, preferably between 1 and 5 weight %.
   h. the surface agent is added to the resin comprising 0.01 to 10 % by weight of the total mixture, preferably between 3 and 8 weight %.
   i. the blowing agent is added to the resin comprising 2 to 40 % by weight of the total mixture, preferably between 8 and 20 weight %.
   j. the blowing gas is a mixture of the liquefied petroleum gases propane, butane, isobutene and dimethylether.
   k. which is formulated as a one component foam in an aerosol can
   l. containing microencapsulated initiator.
   m. the initiator is encapsulated in glass spheres, microspheres obtained via low boiling solvents and microspheres obtained from emulsion polymerization.

## Claims

1. A pressurized vessel or can containing a one-component polymer foam composition comprising an unsaturated resin, a surface agent, an initiator, and a blowing agent, **characterized in that** said initiator is micro-encapsulated such that upon spraying the micro-capsules are broken.

2. The vessel of claim 1 comprising also one or more ingredients chosen in the group consisting of an activator, a flame retardant, a plasticizer, an emulsifier, and a thickener.

3. The vessel or can can according to claim 1 where the unsaturated resin is an unsaturated polyester at a concentration of 50 to 90 % by weight based on the total composition, preferably between 70 and 80 %.

4. A vessel or can according to claim 2 where the ingredients are in a concentration varying between 0.01 to 10 % by weight of the total mixture, preferably between 1 and 8 weight %.

5. A vessel or can according to claim 1 where the blowing agent is added to the resin at a concentration of 2 to 40 % by weight of the total mixture, preferably between 8 and 20 weight %.

6. A vessel or vcan according to claim 5, where the blowing gas is a mixture of the liquefied petroleum gases propane and/or butane, and/or isobutene and/or dimethylether.

7. A one-component polymer foam composition comprising an unsaturated resin, preferably an unsaturated polyester, a blowing agent, an initiator and an activator, **characterized in that** said initiator is micro-encapsulated.

## Patentansprüche

1. Druckgefäß oder -kanister, das bzw. der eine Einkomponenten-Polymerschaumzusammensetzung enthält, die ein ungesättigtes Harz, einen oberflächenaktiven Stoff, einen Initiator und ein Treibmittel umfasst, **dadurch gekennzeichnet, dass** der Initiator derart mikroverkapselt ist, dass die Mikrokapseln beim Sprühen aufgebrochen werden.

2. Gefäß nach Anspruch 1, das außerdem einen oder mehrere Bestandteile umfasst, der bzw. die aus der Gruppe bestehend aus einem Aktivator, einem Flammschutzmittel, einem Weichmacher, einem Emulgator und einem Verdickungsmittel ausgewählt ist bzw. sind.

3. Gefäß oder Kanister nach Anspruch 1, wobei das ungesättigte Harz ein ungesättigter Polyester in einer Konzentration von 50 bis 90 Gew.-%, bezogen auf die Gesamtzusammensetzung, vorzugsweise zwischen 70 und 80 % ist.

4. Gefäß oder Kanister nach Anspruch 2, wobei die Bestandteile in einer Konzentration vorliegen, die zwischen 0,01 bis 10 Gew.-% des Gesamtgemischs, vorzugsweise zwischen 1 und 8 Gew.-% variieren.

5. Gefäß oder Kanister nach Anspruch 1, wobei das Treibmittel dem Harz in einer Konzentration von 2 bis 40 Gew.-% des Gesamtgemischs, vorzugsweise zwischen 8 und 20 Gew.-% zugesetzt wird.

6. Gefäß oder Kanister nach Anspruch 5, wobei das Treibgas ein Gemisch der verflüssigten Erdgase Propan und/oder Butan und/oder Isobuten und/oder Dimethylether ist.

7. Einkomponenten-Polymerschaumzusammensetzung, die ein ungesättigtes Harz, vorzugsweise einen ungesättigten Polyester, ein Treibmittel, einen Initiator und einen Aktivator umfasst, **dadurch gekennzeichnet, dass** der Initiator mikroverkapselt ist.

## Revendications

1. Récipient ou bidon sous pression contenant une composition de mousse polymère monocomposante comprenant une résine insaturée, un agent de surface, un inducteur, et un agent d'expansion, **caractérisé en ce que** ledit inducteur est micro-encapsulé de telle sorte que lors d'une vaporisation les micro-capsules sont rompues.

2. Récipient selon la revendication 1, comprenant également un ou plusieurs ingrédients choisis dans le groupe constitué d'un activateur, un retardateur de flamme, un plastifiant, un émulsifiant, et un épaississant.

3. Récipient ou bidon selon la revendication 1, où la résine insaturée est un polyester insaturé à une concentration de 50 à 90 % en poids sur base de la composition totale, de préférence entre 70 et 80 %.

4. Récipient ou bidon selon la revendication 2, où les ingrédients sont en une concentration variant entre 0,01 et 10 % en poids du mélange total, de préférence entre 1 et 8 % en poids.

5. Récipient ou bidon selon la revendication 1, où l'agent d'expansion est ajouté à la résine à une concentration de 2 à 40 % en poids du mélange total, de préférence entre 8 et 20 % en poids.

6. Récipient ou bidon selon la revendication 5, où le gaz d'expansion est un mélange des gaz pétroliers liquéfiés propane et/ou butane, et/ou isobutène et/ou éther diméthylique.

7. Composition de mousse polymère monocomposante comprenant une résine insaturée, de préférence un polyester insaturé, un agent d'expansion, un inducteur et un activateur, **caractérisée en ce que** ledit inducteur est micro-encapsulé.
